# EUROPÄISCHE PATENTSCHRIFT

(11) **EP 0 733 204 B1**
(45) Veröffentlichungstag und Bekanntmachung des Hinweises auf die Patenterteilung: **21.05.2003**
(21) Anmeldenummer: 95931158.0
(22) Anmeldetag: 22.09.1995
(51) Int. Cl.: G01N 27/419

(54) **MESSFÜHLER ZUR BESTIMMUNG DES SAUERSTOFFGEHALTES IN GASGEMISCHEN**
MEASURING SENSOR TO DETERMINE THE OXYGEN CONTENT OF GAS MIXTURES
CAPTEUR DE MESURE PERMETTANT DE DETERMINER LA TENEUR EN OXYGENE DE MELANGES GAZEUX

(30) Priorität: 11.10.1994 DE 4436222
(43) Veröffentlichungstag der Anmeldung: 25.09.1996
(73) Patentinhaber: ROBERT BOSCH GMBH, 70442 Stuttgart (DE)
(72) Erfinder: DIETZ, Hermann, D-70839 Gerlingen (DE); GRÜNWALD, Werner, D-70839 Gerlingen (DE); DE LA PRIETA, Claudio, D-70569 Stuttgart (DE); LINDEMANN, Gert, D-72805 Lichtenstein (DE); EISELE, Ulrich, D-70199 Stuttgart (DE); SCHMIEDEL, Carmen, D-71726 Benningen (DE)
(86) Internationale Anmeldenummer: DE9501305
(87) Internationale Veröffentlichungsnummer: WO96011394

(56) Entgegenhaltungen:
- EP-A- 0 580 206
- DE-A- 3 632 456
- DE-A- 4 333 232
- GB-A- 2 052 758
- US-A- 4 724 061
- US-A- 4 810 350

## Beschreibung

Die Erfindung betrifft einen Meßfühler zur Bestimmung des Sauerstoffgehaltes in Gasgemischen nach dem Oberbegriff des Anspruchs 1.

### Stand der Technik

Meßfühler der gattungsgemäßen Art sind bekannt. So zeigt beispielsweise die DE-A1-36 32 456 eine Sonde zur Regelung des Kraftstoff-Luft-Gemisches für Verbrennungskraftmaschinen. Diese weist eine erste Pumpzelle mit zwei porösen Elektroden, die auf gegenüberliegenden Seiten einer ersten Platte aus einem sauerstoffionenleitenden Festelektrolyten angeordnet sind, sowie eine zweite Pumpzelle mit ebenfalls zwei porösen Elektroden auf, die wiederum auf gegenüberliegenden Seiten einer zweiten Platte aus einem sauerstoffionenleitenden Festelektrolyten angeordnet sind. Je eine poröse Elektrode der beiden Pumpzellen steht mit einem zwischen den Pumpzellen befindlichen Gasraum in Kontakt, der seinerseits über einen als Diffusionsbegrenzungsteil wirkenden Kanal mit dem zu messenden Abgas der Verbrennungskraftmaschine in Verbindung steht. Eine der porösen Elektroden der ersten Pumpzelle, und zwar die nicht mit dem Gasraum in Kontakt stehende Elektrode, dient zugleich als interne Sauerstoffbezugsreferenz. Diese Elektrode ist über ein Leckdrosselteil mit der anderen, mit dem Gasraum in Kontakt stehenden Elektrode der ersten Pumpzelle verbunden. Durch diese Anordnung wird jeweils eine als Pumpzelle ausgebildete Meßsonde und Referenzsonde gebildet.

Mittels eines derartigen Meßfühlers kann die Zusammensetzung des Abgases der Verbrennungskraftmaschine dahingehend ausgewertet werden, ob in dem Kraftstoff-Luft-Gemisch, mit dem die Verbrennungskraftmaschine betrieben wird, der Kraftstoff oder der Sauerstoff im stöchiometrischen Überschuß vorliegen oder der Kraftstoff und die Luft der Stöchiometrie entsprechen. Dies ist möglich, da bekannterweise die Zusammensetzung des Kraftstoff-Luft-Gemisches die Zusammensetzung des Abgases bestimmt. Im sogenannten fetten Bereich - bei stöchiometrischem Überschuß des Kraftstoffes - finden sich erhebliche Mengen an unverbranntem oder teilweise verbranntem Kraftstoff im Abgas, während der Sauerstoffanteil gering ist. Im sogenannten mageren Bereich, - bei dem der Sauerstoff stöchiometrisch überwiegt - ist der Sauerstoffgehalt im Abgas entsprechend hoch. Bei einer stöchiometrischen Zusammensetzung des Kraftstoff-Luft-Gemisches sind sowohl der Kraftstoff als auch der Sauerstoff im Abgas minimiert. Ein gängiges Maß für das Kraftstoff-Luft-Verhältnis ist der im Abgas gemessene sogenannte Lambdawert, der im mageren Bereich >1, im fetten Bereich <1 und im exakt stöchiometrischen Bereich = 1 ist. Der Lambdawert ist mittels des eingangs genannten Messfühlers ermittelbar, so dass über eine mit dem Messfühler verbundene Auswerteschaltung eine Regelung des Kraftstoff-Luft-Gemisches für den Verbrennungsmotor möglich ist.

Aus der älteren Patentanmeldung DE 43 33 232 ist ein Messfühler zur Bestimmung des Sauerstoffgehaltes von Gasgemischen bekannt, bei dem eine Messsonde und eine Referenzsonde jeweils als Pumpzelle mit einer gemeinsamen Elektrode ausgebildet sind, die schichtförmig auf einem gemeinsamen Substrat angeordnet sind. Die Elektroden der beiden Pumpzellen werden von einem gemeinsamen Festelektrolyten umgeben.

Den bekannten Messfühlem ist gemeinsam, dass diese einerseits dem eine hohe Temperatur aufweisenden Abgas der Verbrennungsmotoren ausgesetzt sind und andererseits für ihre Anwendung eine Mindestbetriebstemperatur benötigen, so dass diese oftmals eine zusätzliche Heizquelle besitzen. Hierbei ist nachteilig, dass es in den Messfühlern auf Grund unterschiedlicher Wärmeausdehnungskoeffizienten der verwendeten Materialien zu einer thermischen Belastung kommt, die zu einer Beeinträchtigung bzw. Zerstörung der Messfühler führen kann.

Aus der US 4,810,350 ist ein Gasmessfühler bekannt, bei dem auf einem Träger einer erste und eine zweite elektrochemische Zelle vorgesehen ist. Die erste elektrochemische Zelle wird als galvanische Messzelle, die zweite elektrochemische Zelle als galvanische Pumpzelle betrieben. Die beiden elektrochemischen Zellen weisen jeweils eine erste und eine zweite Elektrode auf, wobei die ersten Elektroden in einem gemeinsamen Referenzgasraum angeordnet sind und die zweiten Elektroden mit dem zu bestimmenden Messgas in Kontakt stehen.

### Vorteile der Erfindung

Der erfindungsgemäße Messfühler mit den im Anspruch 1 genannten Merkmalen bietet demgegenüber den Vorteil, dass dieser eine verbesserte thermische Belastbarkeit besitzt. Dadurch, daß die Meßsonde und die Referenzsonde voneinander getrennt in einem gemeinsamen Basissubstrat eingebettet sind und die Festelektrolyten von Festelektrolytinseln gebildet sind, die ausschließlich im Bereich der Elektroden angeordnet sind, werden die thermischen Spannungen durch einen unterschiedlichen Wärmeausdehnungskoeffizienten der Festelektrolyten und des Basismaterials reduziert. Insbesondere durch die Ausbildung der Festlektrolyten als Festelektrolytinseln werden die Absolutwerte der thermisch bedingten Dehnungsunterschiede zwischen den Festelektrolytinseln und dem Basissubstrat derart minimiert, daß keine thermischen Spannungen und damit keine Rißbildungen in den Meßfühlern auftreten können.

Darüber hinaus ist durch die voneinander getrennte Anordnung - also ohne gemeinsame Elektrode - der Meßsonde und der Referenzsonde der Aufbau des Meßfühlers vorzugsweise aus einzelnen, insbesondere im Siebdruckverfahren aufgebrachten Schichten möglich. Durch einen einfachen - da technologisch bekannt und beherrschbaren - Schichtaufbau kann so ein Meßfühler mit getrennter Meßsonde und getrennter Referenzsonde hergestellt werden. Die Referenzsonde kann hierbei vorteilhaft als Lambdasonde ausgebildet sein, die den Sauerstoffgehalt des Gasgemisches ermittelt, während die Meßsonde als Grenzstrom-Pumpzelle mit unterschiedlicher Pumpstromrichtung aufgebaut sein kann. Die Lambdasonde dient hier vorteilhafterweise zur Einstellung der Pumpstromrichtung der Meßsonde, so daß über eine angeschlossene Auswerteschaltung auf die Zusammensetzung des gemessenen Gasgemisches, insbesondere über die Einstellung eines Kraftstoff-Luft-Gemisches für Verbrennungskraftmaschinen, Einfluß genommen werden kann.

Weitere vorteilhafte Ausgestaltungen der Erfindung ergeben sich aus den übrigen in den Unteransprüchen genannten Merkmalen.

### Zeichnung

Die Erfindung wird nachfolgend in einem Ausführungsbeispiel an Hand der zugehörigen Zeichnungen näher erläutert. Es zeigen:
- Figur 1: eine Schnittdarstellung durch einen Meßfühler;
- Figur 2: ein elektrisches Ersatzschaltbild des Meßfühlers und
- Figur 3a bis 3e: einen Schichtaufbau des Meßfühlers.

### Beschreibung des Ausführungsbeispiels

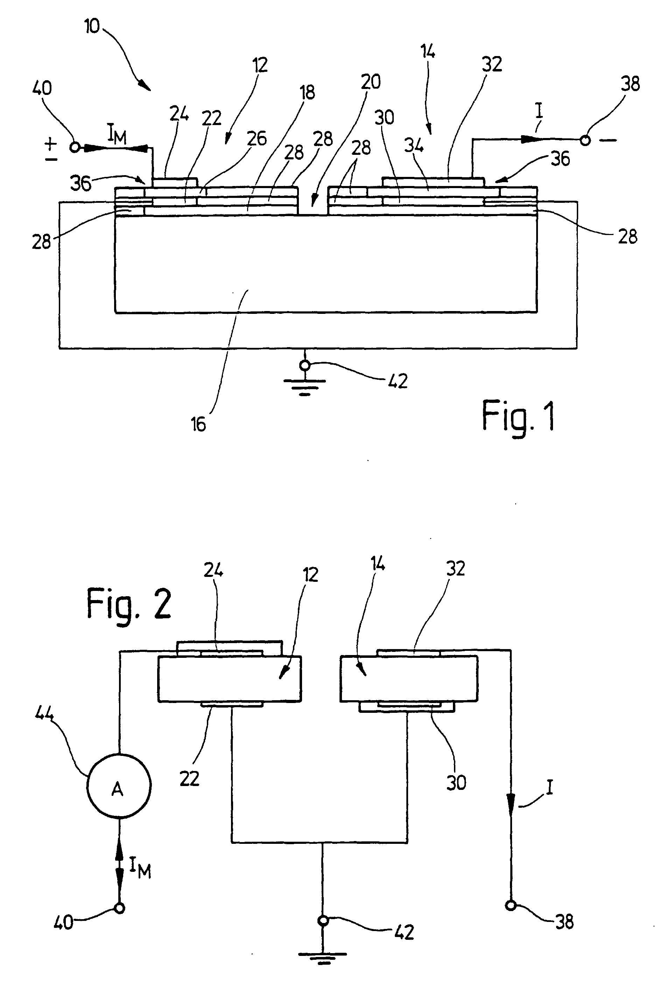

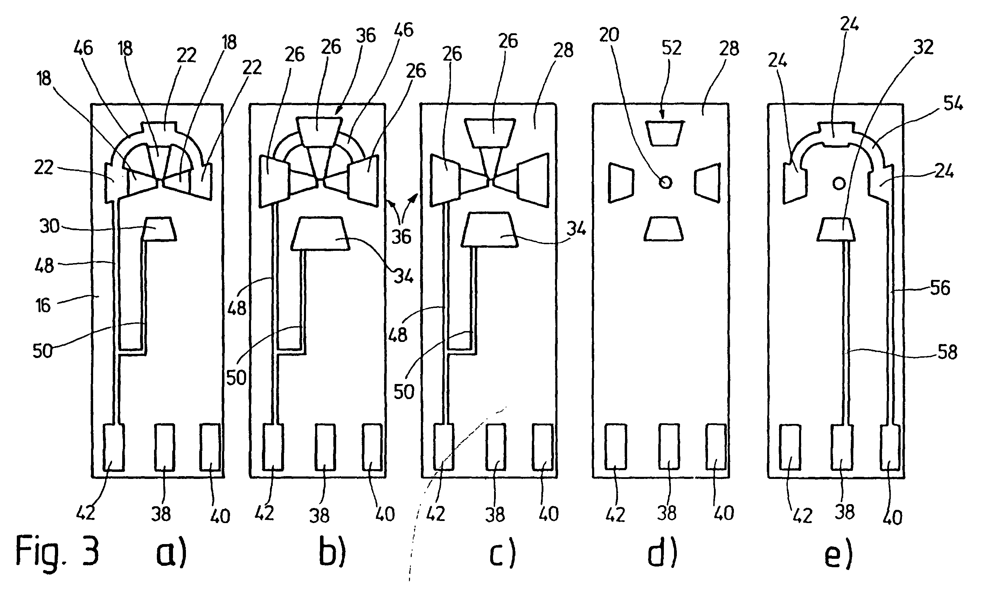

Figur 1 zeigt einen allgemein mit 10 bezeichneten Meßfühler zur Bestimmung des Sauerstoffgehaltes in Gasgemischen, insbesondere in Abgasen von Verbrennungskraftmaschinen. Der Meßfühler 10 besteht aus einer elektrochemischen Meßsonde 12 und einer elektrochemischen Referenzsonde 14. Sowohl die Meßsonde 12 als auch die Referenzsonde 14 sind auf einem gemeinsamen Basissubstrat 16 aufgebaut. Das Basissubstrat 16 kann beispielsweise aus Aluminiumoxid Al₂O₃ bestehen. Auf dem Basissubstrat 16 ist eine Diffusionsbarriere 18 aufgebracht, die über ein Diffusionsloch 20 mit dem zu messenden Gasgemisch in Verbindung steht. Die Diffusionsbarriere 18 besteht beispielsweise aus porösem Zirkonoxid. Die Meßsonde 12 besteht aus einer ersten Elektrode 22 und einer zweiten Elektrode 24, zwischen denen ein Festelektrolyt 26 angeordnet ist. Die Elektrode 22 ist hierbei auf der Diffusionsbarriere 18 angeordnet, während die Elektrode 24 direkt dem zu messenden Gasgemisch ausgesetzt ist. Die Elektroden 22 und 24 sind porös und bestehen beispielsweise aus Platin. Der Festelektrolyt 26 besteht beispielsweise aus einem mit Yttriumoxid stabilisiertem Zirkonoxid. Die einzelnen Bestandteile der Meßsonde 12, das heißt, die Diffusionsbarriere 18, die Elektrode 22, der Festelektrolyt 26 und die Elektrode 24 sind im Basissubstrat 16 eingebettet, wobei im Bereich der Meßsonde 12 das Basissubstrat 16 in einzelnen Schichten 28 aufgetragen ist. Jede der Schichten 28 umschließt hierbei - wie an Hand der Figur 3 noch näher erläutert wird - einen Teil der Meßsonde 12. Eine obere Schicht, die die Elektrode 24 so umschließt, daß diese noch dem Abgas ausgesetzt ist, ist aus Gründen der Übersichtlichkeit nicht dargestellt. Die einzelnen Schichten 28 bestehen beispielsweise ebenfalls aus Aluminiumoxid Al₂O₃. Die Elektrode 22 ist mittels des Festelektrolyts 26 und der überlappenden Schichten 28 gasdicht gegenüber dem zu messenden Abgas abgedichtet.

Die Referenzsonde 14 besteht aus einer ersten Elektrode 30 und einer zweiten Elektrode 32, zwischen denen ein Festelektrolyt 34 angeordnet ist. Die Elektroden 30 und 32 bestehen beispielsweise wiederum aus porösem Platin, während der Festelektrolyt 34 beispielsweise aus Yttriumoxid stabilisiertem Zirkonoxid besteht. Die Elektroden 30 und 32 sowie der Festelektrolyt 34 sind ebenfalls wieder in den Schichten 28 des Basissubstrats 16 eingebettet. Die erste Elektrode 30 der Referenzsonde 14 ist durch die Schichten 28 und den Festelektrolyten 34 ebenfalls gasdicht gegenüber dem zu messenden Gasgemisch abgedichtet und steht mit einem Referenzgas, beispielsweise der Atmosphäre, in Verbindung. Die zweite Elektrode 32 der Referenzsonde 14 ist dem zu messenden Gasgemisch unmittelbar ausgesetzt.

Der Meßfühler 10 besteht also insgesamt aus den getrennt aufgebauten Meßsonden 12 und Referenzsonde 14, die jedoch in einem gemeinsamen Basissubstrat 16 eingebettet sind. Die Festelektrolyten 26 beziehungsweise 34 sind ausschließlich im Bereich der Elektroden 22 und 24 beziehungsweise 30 und 32 angeordnet und in den übrigen Bereichen des Meßfühlers 10 von den Schichten 28 des Basissubstrats 16 umgeben. Die Festelektrolyten 26 beziehungsweise 34 bilden somit Festelektrolytinseln 36 (Figur 3) aus, die ausschließlich im Bereich der Elektroden 22 und 24 beziehungsweise 30 und 32 angeordnet sind. Die Elektroden 22, 24, 30 und 32 sind über in Figur 1 nicht dargestellte Leiterbahnen mit nach außen geführten Kontaktstellen verbunden, die mit einer Auswerteschaltung verbindbar sind. Die Elektrode 32 ist mit einer ersten Kontaktstelle 38, die Elektrode 24 mit einer zweiten Kontaktstelle 40 und die Elektroden 22 und 30 mit einer gemeinsamen dritten Kontaktstelle 42 verbunden.

In der Figur 2 ist ein elektrisches Ersatzschaltbild des in Figur 1 dargestellten Meßfühlers 10 verdeutlicht. Hierbei wird ersichtlich, daß die Meßsonde 12 und die Referenzsonde 14 miteinander verschaltete, getrennt aufgebaute Elemente sind.

Der in den Figuren 1 und 2 gezeigte Meßfühler 10 übt folgende Funktion aus:
Sowohl die Meßsonde 12 als die Referenzsonde 14 sind dem zu messenden Gasgemisch, beispielsweise dem Abgas einer Verbrennungskraftmaschine, ausgesetzt. Die Referenzsonde 14 arbeitet hierbei als allgemein bekannte Lambdasonde. Über die Referenzsonde 14 fließt hierbei ein konstanter Strom I, der von einer nicht dargestellten Stromquelle, beispielsweise der Batterie eines Kraftfahrzeuges, geliefert wird. Ändert sich nunmehr eine Sauerstoffkonzentration zwischen den Elektroden 32 und 30 der Referenzsonde 14, beispielsweise weil sich das Kraftstoff-Luft-Gemisch, mit dem die nicht dargestellte Verbrennungskraftmaschine betrieben wird, vom fetten in den mageren Bereich oder umgekehrt verändert, ändert sich an der Referenzsonde 14 eine Detektorspannung, die von der nicht dargestellten Auswerteschaltung abgegriffen werden kann. Bei einem Wechsel in den fetten Bereich, also bei einer niedrigeren Sauerstoffkonzentration im zu messenden Abgas, fällt die Detektorspannung ab, während sie im mageren Bereich ansteigt. Die Referenzsonde 14 liefert somit ein Signal, ob die Verbrennungskraftmaschine mit einem fetten oder einem mageren Gemisch betrieben wird. Die nicht dargestellte Auswerteschaltung vergleicht die von der Referenzsonde 14 gelieferte Detektorspannung mit einer Referenzspannung und liefert im Ergebnis dessen - in hier nicht näher zu betrachtender Weise - einen Meßstrom I_{M}, der über die Kontaktstelle 40 an der Meßsonde 12 anliegt. Die Diffusionsbarriere 18 an der Meßsonde 12 bewirkt, daß der Meßstrom I_{M} in der Meßsonde 12 ausschließlich durch einen Sauerstoffionen-Diffusionsvorgang bestimmt wird und an der Elektrode 22 ein konstanter Sauerstoffpartialdruck aufrechterhalten werden kann. Bei Betrieb im mageren Bereich, das heißt, bei sauerstoffreichen Abgasen, behindert die Diffusionsbarriere 18 insbesondere die Diffusion von Sauerstoffionen zur Elektrode 22 und bei Betrieb im fetten Bereich, das heißt, bei Abgasen mit wenig Sauerstoff, insbesondere die Diffusion von unverbrannten Anteilen wie Kohlenmonoxid und Wasserstoff zur Elektrode 22. Die Diffusionsbarriere 18 ist so aufgebaut, daß sich an der Elektrode 22 der Sauerstoffpartialdruck einstellen kann, der der Referenzspannung entspricht. Die Referenzspannung wird so gewählt, daß sich ein bestimmter Sauerstoffpartialdruck einstellt, wenn der Lambdawert des Abgases =1 beträgt, also ein Kraftstoff-Luft-Gemisch im stöchiometrischen Bereich gefahren wird. Es wird also gewährleistet, daß die Meßsonde 12 als spannungsunabhängige Grenzstromsonde arbeitet. Je nach dem über die Referenzsonde 14 ermittelten Lambdawert des Abgases ist die Kontaktstelle 40 als Kathode oder Anode für die Meßsonde 12 geschaltet. Bei einem Lambdawert >1, das heißt, im mageren Bereich des Kraftstoff-Luft-Gemisches, ist die Kontaktstelle 40 als Kathode und bei einem Lambdawert <1, das heißt, im fetten Bereich des Kraftstoff-Luft-Gemisches, als Anode geschaltet. Der sich einstellende Meßstrom I_{M} wird über eine Meßeinrichtung 44, beispielsweise ein Amperemeter, ermittelt. Die Richtung und die Größe des Meßstromes I_{M} ergibt somit ein Maß für den Sauerstoffgehalt in dem zu messenden Gasgemisch, insbesondere im Abgas eines Kraftfahrzeuges. Der Meßstrom I_{M} ist hierbei dem Sauerstoffgehalt direkt proportional.

In den Figuren 3a bis 3e ist der Schichtaufbau des Meßfühlers 10 verdeutlicht, wobei der Meßfühler 10 beginnend mit der Figur 3a im weiteren immer mit einer zusätzlichen Schicht in Draufsicht dargestellt ist. Gleiche Teile wie in den Figuren 1 und 2 sind mit gleichen Bezugszeichen versehen und nicht nochmals erläutert.

In der Figur 3a ist eine Draufsicht auf das Basissubstrat 16 gezeigt, auf dem die Diffusionsbarrieren 18 angeordnet sind. Die Diffusionsbarrieren 18 sind hierbei dreiviertelkreisförmig um einen, später das Diffusionsloch 20 ergebenden Mittelpunkt angeordnet. Die Diffusionsbarrieren 18 bilden hierbei jeweils Kreissegmente, die um einen Winkel von ca. 90° zueinander versetzt sind. Auf den Diffusionsbarrieren 18 sind die ersten Elektroden 22 der Meßsonde 12 angeordnet. Die Elektroden 22 sind über eine kreisbogenförmig verlaufende Leiterbahn 46 miteinander verbunden. Über eine weitere Leiterbahn 48 sind die Elektroden 22 mit der Kontaktstelle 42 verbunden. Weiterhin ist die erste Elektrode 30 der Referenzsonde 14, die in einer gleichen Schicht 28 (Figur 1) wie die Elektrode 22 liegt, dargestellt. Die Elektrode 30 ist über eine Leiterbahn 50 ebenfalls mit der Kontaktstelle 42 verbunden. Auf dem Basissubstrat 16 sind weiterhin die noch nicht kontaktierten Kontaktstellen 38 und 40 vorgesehen. Die Diffusionsbarrieren 18, die Elektroden 22 und 30 sowie die Leiterbahnen 46, 48 und 50 können jeweils in aufeinander folgenden Schritten im Siebdruckverfahren auf das Basissubstrat 16 aufgebracht werden. Sowohl die Diffusionsbarrieren 18 als auch die Elektroden 22 beziehungsweise 30 mit ihren Anschluß-Leiterbahnen 46, 48 beziehungsweise 50 sind jeweils innerhalb der in Zwischenschritten aufgebrachten Schichten 28 (Figur 1) des Basissubstrats 16 eingebettet, das heißt, in der Ebene umschlossen.

In einem in Figur 3b verdeutlichten nächsten Verfahrensschritt werden die Festelektrolyte 26 und 34 aufgebracht. Die Festelektrolyte 24 sind hierbei auf den Elektroden 22 und der Festelektrolyt 34 auf der Elektrode 30 plaziert. Sowohl die Festelektrolyte 24 als auch der Festelektrolyt 34 sind als Festelektrolytinseln 36 ausgebildet, das heißt, diese sind nicht großflächig, sondern nur bereichsweise, auf den Bereich der Elektroden 22 beziehungsweise 30 beschränkt, aufgebracht. Der Bereich zwischen den Festelektrolyten 26 und 34 ist mit einer weiteren Schicht 28 des Basissubstrats 16 - wie Figur 3c zeigt - ausgefüllt. Hierdurch wird die Ausbildung der Festelektrolytinseln 36, die quasi in einer Ebene in der entsprechenden Schicht 28 des Basissubstrats 16 angeordnet sind, erreicht. Hierdurch ergibt sich, daß bei einer betriebsbedingten Erwärmung des gesamten Meßfühlers 10 und damit der einen unterschiedlichen Wärmeausdehnungskoeffizienten besitzenden Festelektrolyten 26 und 34 beziehungsweise des Basissubstrats 16, durch die kleinflächige Ausbildung der Festelektrolyten 26 beziehungsweise 34, daß die Absolutwerte der thermisch bedingten Dehnungsunterschiede zwischen den Festelektrolyten 26 und 34 beziehungsweise dem Basissubstrat 16 minimiert werden. Hierdurch werden die thermischen Spannungen innerhalb des Meßfühlers 10 reduziert, so daß eine Rißbildung in den Festelektrolyten 26 beziehungsweise 34 vermieden werden kann.

In einem nächsten, in Figur 3d verdeutlichten Verfahrensschritt, wird eine weitere Schicht 28 des Basissubstrats 16 auf die bisher geschaffene Struktur aufgebracht. Die Schicht 28 besitzt eine Maskierung 52, die der späteren Anordnung der Elektroden 24 beziehungsweise 32 entspricht. Die Maskierung 52 beinhaltet ebenfalls die Ausbildung des Diffusionslochs 20. In einem nächsten, in Figur 3e verdeutlichten Schritt, werden nunmehr die Elektroden 24 und 32 aufgebracht. Die Elektroden 24 sind hierbei wiederum entsprechend der Anordnung der Elektroden 22 auf einer Kreislinie angeordnet. Die Elektroden 24 sind durch eine Leiterbahn 54 untereinander und mit einer weiteren Leiterbahn 56 mit der Kontaktstelle 40 verbunden. Die Elektrode 32 ist über eine Leiterbahn 58 mit der Kontaktstelle 38 verbunden. Die Elektroden 24 und 32 und die Leiterbahnen 54, 56, 58 können wiederum durch Siebdruck aufgebracht werden.

Insgesamt ist der Meßfühler 10 durch einen einfachen Schichtaufbau gekennzeichnet, der durch allgemein bekannte und zuverlässig beherrschbare aufeinanderfolgende Siebdruckschritte erzielbar ist. Insbesondere kann auch so der getrennte Aufbau der Meßsonde 12 und der Referenzsonde 14 in einem gemeinsamen Basissubstrat 16 erreicht werden, wobei die Festelektrolyten 26 beziehungsweise 34 im Verhältnis zum Basissubstrat 16 klein gehalten werden können.

Die im Ausführungsbeispiel angegebenen Materialangaben sind lediglich beispielhaft und können durch jede andere für den Einsatzzweck des Meßfühlers 10 geeignete Materialien ersetzt werden.

## Patentansprüche

1. Messfühler zur Bestimmung des Sauerstoffgehaltes in Gasgemischen, insbesondere in Abgasen von Verbrennungskraftmaschinen, mit einer elektrochemischen Messsonde und einer elektrochemischen Referenzsonde, die jeweils einen zwischen zwei mit einer Auswerteschaltung verbundenen Elektroden angeordneten Festelektrolyten aufweisen, **dadurch gekennzeichnet, dass** die Messsonde (12) und die Referenzsonde (14) voneinander getrennt in einem gemeinsamen Basissubstrat (16) eingebettet sind und die Festelektrolyte (26, 34) von Festelektrolytinseln (36) gebildet sind, die ausschließlich im Bereich der Elektroden (22, 24 beziehungsweise 30, 32) angeordnet sind, wobei die Referenzsonde (14) eine erste Elektrode (30) und eine zweite Elektrode (32) aufweist, und wobei die erste Elektrode (30) gasdicht gegenüber dem Abgas abgedichtet ist und mit einem Referenzgas in Verbindung steht.

2. Messfühler nach Anspruch 1, **dadurch gekennzeichnet, dass** die Messsonde (12) als Pumpzelle und die Referenzsonde (14) als Lambda-Sonde ausgebildet sind.

3. Messfühler nach einem der vorhergehenden Ansprüche, **dadurch gekennzeichnet, dass** der Messfühler (12) aus einzelnen, vorzugsweise im Siebdruckverfahren auf das Basissubstrat (16) aufgebrachten Schichten (28) aufgebaut ist.

4. Messfühler nach einem der vorhergehenden Ansprüche, **dadurch gekennzeichnet, dass** die Schichten (28) die einzelnen Bestandteile der Messsonde (12) und der Referenzsonde (14) in der Ebene umschließen.

5. Messfühler nach einem der vorhergehenden Ansprüche, **dadurch gekennzeichnet, dass** in einer ersten Schicht (28) eine Diffusionsbarriere (18) für die Messsonde (12) angeordnet ist.

6. Messfühler nach einem der vorhergehenden Ansprüche, **dadurch gekennzeichnet, dass** in einer zweiten Schicht (28) die Elektroden (22) der Messsonde (12) und die Elektrode (34) der Referenzsonde (14) angeordnet sind.

7. Messfühler nach einem der vorhergehenden Ansprüche, **dadurch gekennzeichnet, dass** in einer dritten Schicht (28) die Festelektrolyte (26, 34) der Messsonde (12) und der Referenzsonde (14) angeordnet sind.

8. Messfühler nach einem der vorhergehenden Ansprüche, **dadurch gekennzeichnet, dass** in einer vierten Schicht (28) die Elektroden (24, 32) der Messsonde (12) und der Referenzsonde (14) angeordnet sind.

9. Messfühler nach einem der vorhergehenden Ansprüche, **dadurch gekennzeichnet, dass** die Diffusionsbarriere (18), die Elektroden (22), der Festelektrolyt (26) und die Elektroden (24) der Messsonde (12) von auf einer Kreislinienform angeordneten, einzelnen, zueinander beabstandeten Kreissegmenten gebildet sind, wobei die Elektroden (22) über eine Leiterbahn (46) und die Elektroden (24) über eine Leiterbahn (54) miteinander verbunden sind.

10. Messfühler nach Anspruch 9, **dadurch gekennzeichnet, dass** die Kreissegmente in einem Winkel von 90° zueinander versetzt angeordnet sind.

11. Messfühler nach einem der vorhergehenden Ansprüche, **dadurch gekennzeichnet, dass** die Kreissegmente um ein von den Schichten (28) gebildetes, die Diffusionsbarriere (18) mit dem Gasgemisch verbindenden Diffusionsloch (20) angeordnet sind.

12. Messfühler nach einem der vorhergehenden Ansprüche, **dadurch gekennzeichnet, dass** die Messsonde (12) von drei jeweils aus einer Diffusionssperre (18), Elektrode (22), Festelektrolyt (26) und Elektrode (24), jeweils um 90° zueinander versetzt auf einer Kreisebene angeordneten Kreissegmenten gebildet ist, und ein viertes in derselben Ebene liegendes Kreissegment die Referenzsonde (14) bildet.

## Claims

1. Measuring sensor for determining the oxygen content in gas mixtures, in particular in exhaust gases from internal combustion engines, having an electrochemical measuring probe and an electrochemical reference probe, which each have a solid electrolyte arranged between two electrodes connected to an evaluation circuit, **characterized in that** the measuring probe (12) and the reference probe (14) are embedded, separately from one another, in a common base substrate (16) and the solid electrolytes (26, 34) are formed by solid-electrolyte islands (36) which are arranged exclusively in the region of the electrodes (22, 24 and 30, 32, respectively), the reference probe (14) having a first electrode (30) and a second electrode (32), and the first electrode (30) being sealed in a gastight manner with respect to the exhaust gas and being in communication with a reference gas.

2. Measuring sensor according to Claim 1, **characterized in that** the measuring probe (12) is designed as a pumping cell and the reference probe (14) is designed as a lambda probe.

3. Measuring sensor according to one of the preceding claims, **characterized in that** the measuring sensor (12) is composed of individual layers (28) which are applied to the base substrate (16), preferably using the screen-printing process.

4. Measuring sensor according to one of the preceding claims, **characterized in that** the layers (28) surround the individual components of the measuring probe (12) and of the reference probe (14) in the same plane.

5. Measuring sensor according to one of the preceding claims, **characterized in that** a diffusion barrier (18) for the measuring probe (12) is arranged in a first layer (28).

6. Measuring sensor according to one of the preceding claims, **characterized in that** the electrodes (22) of the measuring probe (12) and the electrode (34) of the reference probe (14) are arranged in a second layer (28).

7. Measuring sensor according to one of the preceding claims, **characterized in that** the solid electrolytes (26, 34) of the measuring probe (12) and of the reference probe (14) are arranged in a third layer (28).

8. Measuring sensor according to one of the preceding claims, **characterized in that** the electrodes (24, 32) of the measuring probe (12) and of the reference probe (14) are arranged in a fourth layer (28).

9. Measuring sensor according to one of the preceding claims, **characterized in that** the diffusion barrier (18), the electrodes (22), the solid electrolyte (26) and the electrodes (24) of the measuring probe (12) are formed by individual segments of a circle which are arranged on a circle line shape and are spaced apart from one another, the electrodes (22) being connected to one another via a conductor track (46) and the electrodes (24) being connected to one another via a conductor track (54).

10. Measuring sensor according to Claim 9, **characterized in that** the circle segments are arranged offset from one another by an angle of 90°.

11. Measuring sensor according to one of the preceding claims, **characterized in that** the circle segments are arranged around a diffusion hole (20) which is formed by the layers (28) and connects the diffusion barrier (18) to the gas mixture.

12. Measuring sensor according to one of the preceding claims, **characterized in that** the measuring probe (12) is formed by three circle segments, which each comprise a diffusion barrier (18), electrode (22), solid electrolyte (26) and electrode (24), are each offset by 90° with respect to one another and are arranged on one circle plane, and a fourth circle segment which lies in the same plane forms the reference probe (14).

## Revendications

1. Capteur de mesure pour déterminer la teneur en oxygène dans des mélanges gazeux notamment dans les gaz d'échappement de moteurs thermiques, comportant une sonde de mesure électrochimique et une sonde de référence électrochimique ayant chacune un électrolyte solide relié à deux électrodes liées à un circuit d'exploitation,
**caractérisé en ce que**
la sonde de mesure (12) et la sonde de référence (14) sont intégrées de façon séparée l'une de l'autre dans un substrat de base commun (16), et les électrolytes solides (26, 34) sont formés par des îlots d'électrolyte solide (36) prévus exclusivement au niveau des électrodes (22, 24 ou 30, 32), la sonde de référence (14) comportant une première électrode (30) et une seconde électrode (32), dont la première électrode (30) est séparée de manière étanche par rapport aux gaz d'échappement et est en contact avec un gaz de référence.

2. Capteur de mesure selon la revendication 1,
**caractérisé en ce que**
la sonde de mesure (12) est réalisée sous la forme d'une cellule de pompage et la sonde de référence (14) comme sonde λ.

3. Capteur de mesure selon l'une des revendications précédentes,
**caractérisé en ce que**
le capteur de mesure (12) est formé de différentes couches (28) appliquées de préférence par sérigraphie sur le substrat de base (16).

4. Capteur de mesure selon l'une des revendications précédentes,
**caractérisé en ce que**
les couches (28) entourent les différents composants de la sonde de mesure (12) et de la sonde de référence (14) dans le plan.

5. Capteur de mesure selon l'une quelconque des revendications,
**caractérisé par**
une barrière de diffusion (18) installée pour la sonde de mesure (12) dans une première couche (28).

6. Capteur de mesure selon l'une quelconque des revendications,
**caractérisé en ce que**
les électrodes (22) de la sonde de mesure (12) et l'électrode (34) de la sonde de référence (14) sont prévues dans une seconde couche (28).

7. Capteur de mesure selon l'une des revendications précédentes,
**caractérisé en ce que**
les électrolytes solides (26, 34) de la sonde de mesure (12) et de la sonde de référence (14) sont prévus dans une troisième couche (28).

8. Capteur de mesure selon l'une quelconque des revendications,
**caractérisé en ce que**
les électrodes (24, 32) de la sonde de mesure (12) et de la sonde de référence (14) sont prévues dans une quatrième couche (28).

9. Capteur de mesure selon l'une quelconque des revendications,
**caractérisé en ce que**
la barrière de diffusion (18), les électrodes (22), l'électrolyte solide (26) et les électrodes (24) de la sonde de mesure (12) sont répartis sur un arc de cercle en étant formés par des segments de cercle écartés, et les électrodes (22) sont reliées par un chemin conducteur (46) et les électrodes (24) par un chemin conducteur (54).

10. Capteur de mesure selon la revendication 9,
**caractérisé en ce que**
les segments de cercle sont décalés les uns des autres suivant un angle de 90°.

11. Capteur de mesure selon l'une quelconque des revendications,
**caractérisé en ce que**
les segments de cercle sont installés autour d'un trou de diffusion (20) formé par les couches (28) et qui relient la barrière de diffusion (18) au mélange gazeux.

12. Capteur de mesure selon l'une des revendications précédentes,
**caractérisé en ce que**
la sonde de mesure (12) est formée par trois segments de cercle décalés de 90° et répartis sur un arc de cercle en se composant d'une barrière de diffusion (18), d'une électrode (22), de l'électrolyte solide (26) et d'une électrode (24), un quatrième segment de cercle situé dans le même plan formant la sonde de référence (14).
